# FASCICULE DE BREVET EUROPEEN

(11) **EP 1 732 784 B1**
(45) Date de publication et mention de la délivrance du brevet: **19.09.2007**
(21) Numéro de dépôt: 04805494.4
(22) Date de dépôt: 19.11.2004
(51) Int. Cl.: B60R 7/06

(54) **AGENCEMENT DE PLANCHE DE BORD COMPRENANT UNE CAVITE DE RANGEMENT DE VOLUME MODIFIABLE**
ARMATURENBRETTANORDNUNG MIT EINEM HANDSCHUHFACH MIT VERSTELLBAREM VOLUMEN
DASHBOARD ARRANGEMENT COMPRISING A GLOVE BOX WITH ADJUSTABLE VOLUME

(30) Priorité: 09.04.2004 FR 0403788
(43) Date de publication de la demande: 20.12.2006
(73) Titulaire: Faurecia Interieur Industrie, 92000 Nanterre (FR)
(72) Inventeur: BRANCHERIAU, Christian, F-95220 HERBLAY (FR); ERCOLANO, Tony, F-60130 WAVIGNIES (FR); REANT, Richard, F-60240 MONTAGNY EN VEXIN (FR); GUERREIRO, Pierre, F-95210 Saint Gratien (FR)
(74) Mandataire: Domenego, Bertrand
(86) Numéro de dépôt international: PCT/FR2004/002957
(87) Numéro de publication internationale: WO 2005/108170

(56) Documents cités:
- WO-A-20/05028255
- US-A- 5 915 776
- US-A- 6 109 493
- PATENT ABSTRACTS OF JAPAN vol. 0101, no. 87 (M-493), 2 juillet 1986 (1986-07-02) & JP 61 030442 A (NISSAN MOTOR CO LTD), 12 février 1986 (1986-02-12)

## Description

La présente invention concerne un agencement de planche de bord, comprenant une cavité de rangement délimitée par :
- des parois fixes par rapport à la planche de bord, et
- une paroi principale de fermeture, ayant une extrémité articulée par rapport aux parois fixes, de façon à présenter au moins une position ouverte laissant libre accès à la cavité, et une position fermée obturant au moins partiellement la cavité, la paroi principale de fermeture présentant une position ouverte bloquée, dans laquelle elle est bloquée en position ouverte par rapport à la planche de bord.

On connaît dans l'état de la technique de nombreux rangements, de type boîtes à gants, tels que définis ci-dessus, voir US-A-6 109 493.

De façon classique, la paroi de fermeture est une porte rigide définissant un volume de rangement fixe, lorsque l'accès à la cavité est obturé.

Ainsi, que le rangement soit utilisé ou non, et quel que soit son contenu, il occupe un espace invariable qui peut s'avérer gênant pour un occupant du véhicule, notamment pour le placement des jambes du passager avant.

L'invention a pour objet de proposer un agencement qui permette, selon les conditions d'utilisation du rangement, soit de dégager un espace pour l'occupant, soit d'utiliser cet espace pour remplir une fonction de rangement.

Ce but est atteint par l'invention, qui consiste en un agencement du type précité, caractérisé en ce que la paroi principale de fermeture comporte une paroi de fermeture extractible de la paroi principale, par l'extrémité opposée à l'extrémité d'articulation, et en ce que lorsque la paroi principale de fermeture est dans sa position ouverte bloquée, la paroi de fermeture extractible a au moins une position ouverte, laissant libre accès à la cavité, et une position fermée, obturant au moins partiellement la cavité.

Suivant d'autres caractéristiques, optionnelles, de l'agencement selon l'invention :
- la paroi principale de fermeture est essentiellement rigide, tandis que la paroi extractible est essentiellement souple ;
- la paroi principale est creuse, avec un évidement intérieur dans lequel peut être logée la paroi extractible, et dans lequel cette dernière peut coulisser entre sa position rétractée correspondant à sa position ouverte, et sa position extraite correspondant à sa position fermée ;
- l'agencement comprend des moyens de guidage s'étendant latéralement par rapport à la paroi principale de fermeture, assurant le guidage de la paroi extractible entre sa position ouverte et sa position fermée ;
- lesdits moyens de guidage comprennent des rails s'étendant parallèlement du côté de chacune de deux parois fixes latérales, prévus pour recevoir chacun l'un des deux bords opposés de la paroi extractible ;
- la paroi extractible est pourvue de moyens d'accrochage libérables, prévus pour coopérer, dans la position fermée de la paroi extractible, avec des moyens complémentaires d'accrochage agencés sur une partie de planche de bord à proximité de l'entrée de la cavité ;
- la paroi principale est articulée de façon à pouvoir pivoter entre deux parois fixes latérales opposées, lesdites parois latérales opposées et la paroi principale de fermeture comprenant des moyens de blocage complémentaires libérables, assurant le blocage libérable de la paroi principale dans au moins sa position ouverte bloquée et sa position fermée ; et
- lesdits moyens de blocage libérables comprennent, dans chacune des parois latérales opposées, deux évidements formant crans d'arrêt, correspondant chacun à l'une des positions ouverte bloquée et fermée de la paroi principale de fermeture, et un téton complémentaire agencé dans la paroi principale de fermeture, de façon à pouvoir prendre sélectivement une position rétractée dans la paroi principale de fermeture, et une position extraite de blocage, dans laquelle il fait saillie latéralement de la paroi principale et peut s'engager dans un évidement correspondant.

Un mode de réalisation de l'invention va maintenant être décrit plus en détail en référence aux dessins annexés, sur lesquels :
- la Figure 1 est une vue en perspective d'un agencement de planche de bord conforme à l'invention, la porte étant en position ouverte, et la paroi souple étant en position fermée;
- la Figure 2 est une vue en coupe dans un plan vertical longitudinal, suivant la direction 2-2, de l'agencement de la Figure 1, la paroi souple étant cette fois représentée en position ouverte (escamotée) ;
- la Figure 3 est une vue analogue à la Figure 1, la porte étant en position fermée ; et
- la Figure 4 est une vue analogue à la Figure 2, la porte étant en position fermée, telle que représentée à la Figure 3.

Sur les Figures, on a représenté partiellement un agencement de planche de bord, cet agencement comprenant un corps de planche de bord et une cavité de rangement 1 ménagée dans le corps de planche.

Dans l'exemple représenté, la cavité de rangement est du type boîte à gants, située du côté du passager avant, dans une partie inférieure de la planche de bord.

Afin de simplifier la description qui va suivre, les Figures ont été orientées suivant le système d'axes X, Y, Z, qui définit l'orientation usuelle d'un véhicule, et dans lequel :
- l'axe X est l'axe longitudinal du véhicule, orienté d'arrière en avant ;
- l'axe Y est l'axe transversal, orienté de droite à gauche ; et
- l'axe Z est l'axe vertical orienté du bas vers le haut.

Les termes de position et d'orientation qui seront utilisés par la suite s'entendront par rapport à ce système d'axes.

La cavité de rangement 1 est délimitée par des parois fixes par rapport au corps de planche, ces parois fixes étant constituées, dans l'exemple représenté, de deux parois latérales opposées 3 sensiblement verticales, une paroi de fond 5 située à l'avant de la cavité, et une paroi supérieure 7 sensiblement horizontale.

Ces parois fixes 3, 5, 7 peuvent être soit venues de matière avec le corps de planche, soit rapportées sur ce dernier sous la forme d'une partie de caisson pré-assemblée.

La cavité de rangement 1 est en outre délimitée par une porte 9 formant paroi principale de fermeture, qui est articulée, du côté de son bord ou extrémité avant, sur les parois latérales 3, autour d'un axe horizontal Y. L'axe de pivotement Y de la porte 9 par rapport aux parois latérales 3 est matérialisé par des charnières 11 agencées du côté de la paroi de fond 5.

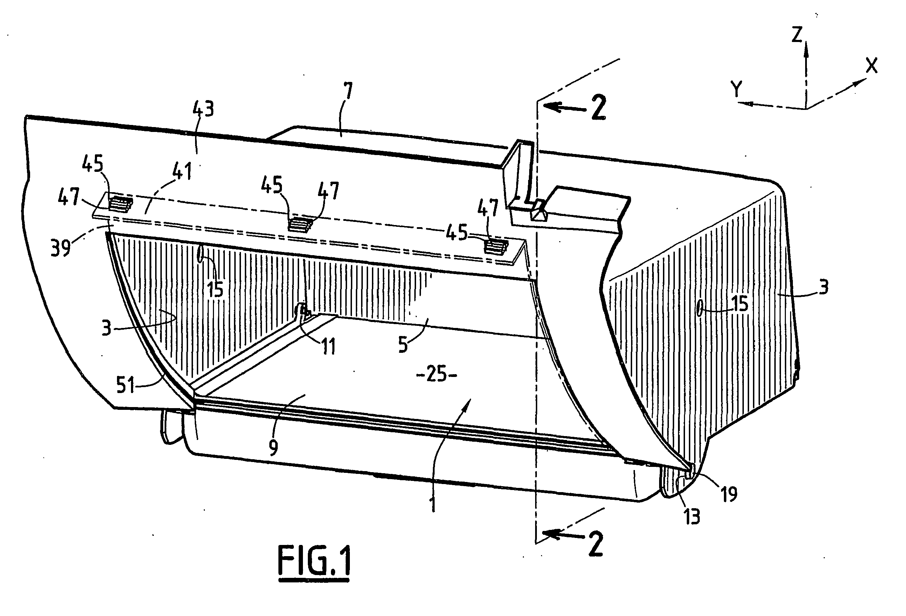

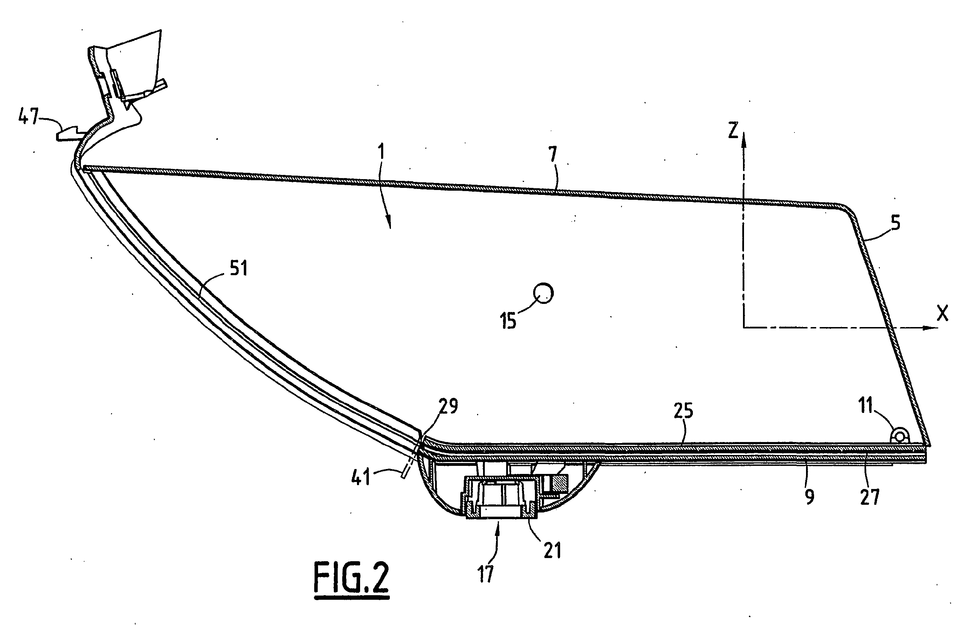

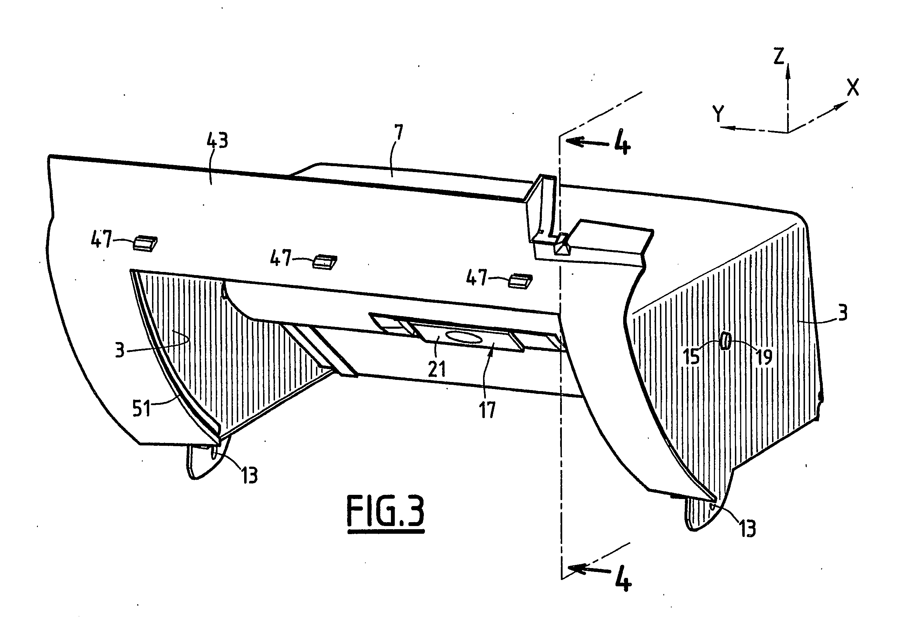

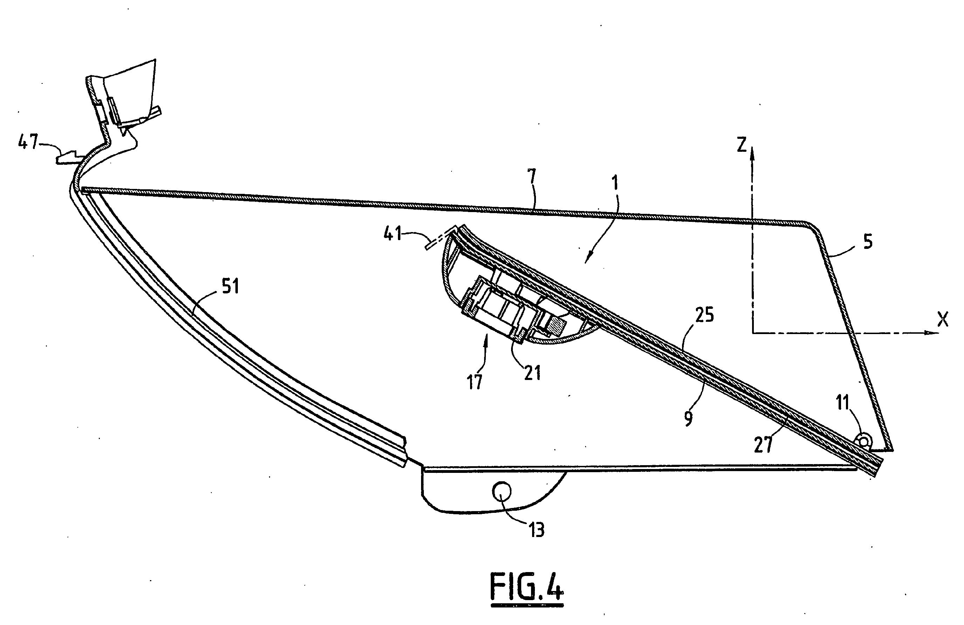

La porte 9 peut pivoter par rapport aux parois fixes 3, 5, 7 entre une position ouverte, telle qu'illustrée sur les Figures 1 et 2, laissant libre accès à la cavité 1 depuis l'arrière, et une position fermée, telle que représentée sur les Figures 3 et 4, obturant au moins partiellement la cavité 1.

La porte 9 est essentiellement rigide, de façon à pouvoir constituer, en position ouverte, un support pour des objets placés dans la cavité de rangement, sans subir de déformation significative dans des conditions normales d'utilisation.

L'agencement comprend en outre des moyens de blocage libérables permettant de bloquer la porte 9 sélectivement dans la position ouverte et dans la position fermée.

Entre ces deux positions, la porte peut prendre naturellement d'autres positions ouvertes, qui ne sont pas, en revanche, stables, c'est-à-dire qui ne peuvent être bloquées. Dans d'autres formes de réalisation, on pourrait prévoir des moyens de blocage permettant de bloquer de façon libérable la porte 9 dans une ou plusieurs positions intermédiaires ouvertes, entre la position ouverte bloquée telle que représentée sur les Figures 1 et 2, et la position fermée telle que représentée sur les Figures 3 et 4.

De façon symétrique par rapport à un plan longitudinal médian XZ de la cavité, les moyens de blocage comprennent de chaque côté du plan un évidement ou orifice 13, 15 formant cran d'arrêt, ménagé dans la paroi latérale 3 pour chaque position bloquée, respectivement ouverte et fermée. Les moyens de blocage comprennent, de façon correspondante, un mécanisme d'enclenchement 17 agencé dans la porte 9, et prévu pour coopérer avec les crans d'arrêt 13, 15.

Ce mécanisme 17 est connu en soi, et ne sera donc pas décrit en détail dans la présente description.

Signalons simplement que ce mécanisme comprend essentiellement, de façon symétrique par rapport au plan médian longitudinal XZ, deux tiges transversales dont chacune est mobile transversalement entre une position rétractée dans la porte, et une position de blocage, dans laquelle son extrémité libre formant téton 19 fait saillie latéralement de la porte 9 et peut s'engager dans l'un des crans d'arrêt 13, 15. Dans une partie médiane de la porte, le mécanisme 17 comprend un organe de manoeuvre 21 permettant de déplacer les tiges de blocage de leur position extraite vers leur position rétractée, à l'encontre de ressorts de rappel sollicitant les tiges dans leur position extraite de blocage. Le mécanisme 17 comprend des organes de transmission (non représentés et qui ne seront pas décrits) assurant la liaison entre l'organe de manoeuvre et les tiges de blocage.

On notera que l'organe de manoeuvre 21 fait de préférence office d'organe de préhension, permettant à un utilisateur d'actionner la porte 9 en pivotement autour des charnières 11 tout en maintenant les moyens de blocage libérés.

La porte 9 a sa paroi interne 25 généralement plane, et horizontale lorsque la porte est dans sa position ouverte bloquée.

La porte 9 est creuse, de façon à présenter intérieurement un évidement 27 formant double-fond. L'évidement 27 débouche vers l'extérieur par une fente transversale 29 dans le bord arrière de la porte 9.

L'agencement comprend en outre une paroi souple, schématisée en traits mixtes sur la Figure 1 sous la référence 39, montée coulissante à l'intérieur de la porte 9, dans l'évidement 27 formant double-fond.

La paroi souple 39 est montée à l'intérieur de la porte 9 de façon à pouvoir coulisser entre une position escamotée (ou rétractée) à l'intérieur de l'évidement 27, et une position extraite par l'arrière de la porte 9 au travers de la fente 29.

Quelle que soit la position de la paroi souple 39 par rapport à la porte 9, la paroi souple reste au moins partiellement engagée dans la porte 9.

La paroi 39 est en outre reliée à la porte 9 par l'intermédiaire de moyens de rappel élastiques (non représentés) sollicitant la paroi souple 39 dans sa position entièrement rétractée, de sorte que l'extraction et éventuellement le maintien en position extraite de la paroi souple sont réalisés à l'encontre d'un effort de rappel élastique.

Du côté de son bord arrière, la paroi souple 39 est dotée d'un rebord 41 formant partie de préhension. Ce rebord de préhension 41 assure, en coopérant avec le bord arrière de la porte 9, une butée d'arrêt dans le sens de la rétraction, de la paroi souple 39 par rapport à la porte 9. Le rebord 41 fait ainsi saillie en permanence de la porte 9, quelle que soit la position extraite ou rétractée de la paroi souple 39 par rapport à la porte 9, et peut être saisi par un utilisateur pour manoeuvrer la paroi souple 39.

Du côté de son bord arrière, la paroi souple 39 est également dotée de moyens d'accrochage prévus pour coopérer avec des moyens d'accrochage complémentaires, agencés sur une partie 43 de façade de planche de bord, au voisinage de l'entrée de la cavité 1, au-dessus du bord arrière de la paroi supérieure 7.

Dans l'exemple représenté, les moyens d'accrochage libérables sont constitués de fenêtres 45, ici au nombre de trois, réparties régulièrement le long du bord arrière de la paroi souple 39, et de crochets complémentaires 47 disposés de façon correspondante en saillie vers l'arrière de la partie de façade 43. Les fenêtres 45 et crochets 47 sont prévus pour s'enclencher mutuellement avec déformation élastique, et pour maintenir, de façon libérable, la paroi souple 39 dans une position extraite de la porte 9. Cette position extraite de la paroi souple 39 assure l'obturation de la cavité 1.

De préférence, les crochets 47 sont venus de moulage avec la partie 43 de façade de planche de bord.

De préférence également, la paroi souple 39 est réalisée d'une pièce en matière plastique souple, ou essentiellement dans une feuille de textile sur laquelle est rapportée une bande rigide destinée à former le rebord de préhension 41.

Afin d'assurer le guidage de la paroi souple 39 entre sa position rétractée dans la porte 9 (telle que représentée par exemple sur la Figure 2) et ses positions extraites, dont notamment sa position extraite de fermeture de la cavité 1 (telle que représentée par des traits mixtes sur la Figure 1), les parois fixes de la cavité sont solidaires de deux rails de guidage 51. Ces rails 51 sont agencés de façon symétrique par rapport au plan médian vertical XZ de la cavité, donc parallèlement l'un à l'autre, latéralement par rapport à la porte 9.

Chaque rail 51 s'étend depuis le bord arrière de la porte 9, lorsque cette dernière est dans sa position ouverte représentée sur les Figures 1 et 2, jusqu'au bord arrière de la paroi supérieure 7, de façon à guider le coulissement de la paroi 39 sur toute la hauteur de la cavité 1.

Chacun des rails 51 reçoit en engagement un bord latéral respectif de la paroi souple 39.

L'invention a été décrite avec une paroi extractible souple, mais pourrait se concevoir avec une paroi extractible rigide ou rigide localement (du type paroi à lattes articulées). Selon la solution adoptée, l'extraction de la paroi 39 devrait être réalisée par coulissement rectiligne, avant une phase de pivotement de la paroi 39 par rapport à la porte 9 pour réaliser l'accrochage en position fermée de la paroi 39.

On va à présent décrire les différentes configurations possibles du rangement défini par la cavité 1, en fonction des positions stables que peuvent prendre la porte 9 et la paroi souple 39.

Dans l'exemple représenté, la porte 9 peut prendre deux positions stables bloquées, l'une ouverte illustrée sur les Figures 1 et 2, l'autre fermée illustrée sur les Figures 3 et 4.

Dans la position ouverte de la porte 9, cette dernière est sensiblement en position horizontale, arrêtée dans le cran d'arrêt 13.

La cavité 1 est alors soit libre d'accès pour l'utilisateur lorsque la paroi souple 39 est en position rétractée ou escamotée dans la porte 9 (Figure 2), soit obturée lorsque la paroi souple 39 est en position extraite et accrochée sur la partie de façade 43 (position illustrée sur la Figure 1).

Ainsi, lorsque la porte est en position ouverte bloquée, la paroi souple 39 peut prendre une position ouverte (cavité en libre accès) ou une position fermée (cavité obturée). Le volume de la cavité 1 est alors maximal.

Comme illustré sur les Figures 3 et 4, la porte 9 peut prendre une position fermée, bloquée de façon libérable dans les crans d'arrêt 15, dans laquelle la porte 9 est relevée, et obture presque totalement la cavité. La porte 9 réduit alors le volume de la cavité 1 par rapport à la configuration représentée sur les Figures 1 et 2.

Dans cette position fermée de la porte 9, la paroi souple 39 est maintenue dans sa position escamotée et reste inutilisée.

On comprend que dans la configuration « porte fermée », par rapport à la configuration « porte ouverte », le volume de rangement représenté par la cavité 1 est réduit en dégageant un espace correspondant, qui améliore le confort du passager ou peut être utilisé à d'autres fins.

L'invention qui vient d'être décrite permet, par des moyens simples, de rendre plus souple l'utilisation de certains volumes de l'habitacle. Le gain de place qui peut être obtenu dans certaines conditions d'utilisation du rangement permet d'améliorer sensiblement le confort des passagers, notamment pour des véhicules de faibles dimensions.

## Revendications

1. Agencement de planche de bord, comprenant une cavité de rangement (1) délimitée par :
- des parois (3, 5, 7) fixes par rapport à la planche de bord, et
- une paroi principale de fermeture (9), ayant une extrémité articulée par rapport aux parois fixes (3, 5, 7), de façon à présenter au moins une position ouverte laissant libre accès à la cavité (1), et une position fermée obturant au moins partiellement la cavité (1),
la paroi principale de fermeture (9) présentant une position ouverte bloquée, dans laquelle elle est bloquée en position ouverte par rapport à la planche de bord,
**caractérisé en ce que** la paroi principale de fermeture (9) comporte une paroi de fermeture (39) extractible de la paroi principale, par l'extrémité opposée à l'extrémité d'articulation,
et **en ce que** lorsque la paroi principale de fermeture (9) est dans sa position ouverte bloquée, la paroi de fermeture extractible (39) a au moins une position ouverte, laissant libre accès à la cavité (1), et une position fermée, obturant au moins partiellement la cavité (1).

2. Agencement suivant la revendication 1, **caractérisé en ce que** la paroi principale de fermeture (9) est essentiellement rigide, tandis que la paroi extractible (39) est essentiellement souple.

3. Agencement suivant la revendication 1 ou 2, **caractérisé en ce que** la paroi principale (9) est creuse, avec un évidement intérieur (27) dans lequel peut être logée la paroi extractible (39), et dans lequel cette dernière peut coulisser entre sa position rétractée correspondant à sa position ouverte, et sa position extraite correspondant à sa position fermée.

4. Agencement suivant l'une quelconque des revendications 1 à 3, **caractérisé en ce qu'**il comprend des moyens de guidage (51) s'étendant latéralement par rapport à la paroi principale de fermeture (9), assurant le guidage de la paroi extractible (39) entre sa position ouverte et sa position fermée.

5. Agencement suivant la revendication 4, **caractérisé en ce que** lesdits moyens de guidage comprennent des rails (51) s'étendant parallèlement du côté de chacune de deux parois fixes latérales (3), prévus pour recevoir chacun l'un des deux bords opposés de la paroi extractible (39).

6. Agencement suivant l'une quelconque des revendications 1 à 5, **caractérisé en ce que** la paroi extractible (39) est pourvue de moyens d'accrochage (45) libérables, prévus pour coopérer, dans la position fermée de la paroi extractible, avec des moyens complémentaires d'accrochage (47) agencés sur une partie (43) de planche de bord à proximité de l'entrée de la cavité (1).

7. Agencement suivant l'une quelconque des revendications 1 à 6, **caractérisé en ce que** la paroi principale (9) est articulée de façon à pouvoir pivoter entre deux parois fixes latérales (3) opposées, lesdites parois latérales (3) opposées et la paroi principale de fermeture (9) comprenant des moyens de blocage complémentaires (13, 15, 19) libérables, assurant le blocage libérable de la paroi principale (9) dans au moins sa position ouverte bloquée et sa position fermée.

8. Agencement suivant la revendication 7, **caractérisé en ce que** lesdits moyens de blocage libérables comprennent, dans chacune des parois latérales opposées (3), deux évidements (13, 15) formant crans d'arrêt, correspondant chacun à l'une des positions ouverte bloquée et fermée de la paroi principale de fermeture (9), et un téton complémentaire (19) agencé dans la paroi principale de fermeture (9), de façon à pouvoir prendre sélectivement une position rétractée dans la paroi principale de fermeture (9), et une position extraite de blocage, dans laquelle il fait saillie latéralement de la paroi principale (9) et peut s'engager dans un évidement (13, 15) correspondant.

## Claims

1. Dashboard arrangement comprising a storage cavity (1) delimited by:
- walls (3, 5, 7) which are fixed relative to the dashboard, and
- a main closing wall (9) having an end which is articulated relative to the fixed walls (3, 5, 7) so as to have at least one open position permitting free access to the cavity (1) and a closed position in which the cavity (1) is at least partly closed,
the main closing wall (9) having a locked open position in which it is locked in the open position relative to the dashboard,
**characterised in that** the main closing wall (9) has a closing wall (39) which is extractable from the main wall through the end remote from the articulated end,
and **in that**, when the main closing wall (9) is in its locked open position, the extractable closing wall (39) has at least one open position permitting free access to the cavity (1) and a closed position in which the cavity (1) is at least partly closed.

2. Arrangement according to claim 1, **characterised in that** the main closing wall (9) is substantially rigid, while the extractable wall (39) is substantially flexible.

3. Arrangement according to claim 1 or 2, **characterised in that** the main wall (9) is hollow, with an inner recess (27) in which the extractable wall (39) can be accommodated and in which the latter is able to slide between its retracted position, which corresponds to its open position, and its extracted position, which corresponds to its closed position.

4. Arrangement according to any one of claims 1 to 3, **characterised in that** it comprises guide means (51) which extend laterally relative to the main closing wall (9) and guide the extractable wall (39) between its open position and its closed position.

5. Arrangement according to claim 4, **characterised in that** said guide means comprise rails (51) which extend in parallel on the side of each of two fixed side walls (3) and which are provided to receive in each case one of the two opposing edges of the extractable wall (39).

6. Arrangement according to any one of claims 1 to 5, **characterised in that** the extractable wall (39) is provided with releasable catch means (45) which are provided to cooperate, when the extractable wall (39) is in its closed position, with complementary catch means (47) provided on a part (43) of the dashboard proximate to the entry to the cavity (1).

7. Arrangement according to any one of claims 1 to 6, **characterised in that** the main wall (9) is articulated in such a manner that it is able to pivot between two fixed opposing side walls (3), said opposing side walls (3) and the main closing wall (9) comprising complementary releasable locking means (13, 15, 19) which releasably lock the main wall (9) in at least its locked open position and its closed position.

8. Arrangement according to claim 7, **characterised in that** said releasable locking means comprise, in each of the opposing side walls (3), two recesses (13, 15) which form stop notches, each corresponding to one of the locked open and closed positions of the main closing wall (9), and a complementary stud (19) formed in the main closing wall (9) in such a manner that it is able selectively to assume a retracted position in the main closing wall (9) and an extracted locking position in which it projects laterally from the main wall (9) and can engage in a corresponding recess (13, 15).

## Patentansprüche

1. Armaturenbrettanordnung, umfassend einen Stauraum (1), der begrenzt ist durch:
- bezüglich des Armaturenbretts feststehende Wände (3, 5, 7) und
- eine Hauptverschlusswand (9), die ein bezüglich der feststehenden Wände (3, 5, 7) angelenktes Ende aufweist, so dass sie mindestens eine offene Stellung, die den Raum (1) frei zugänglich lässt, und eine geschlossene Stellung besitzt, die den Raum (1) mindestens teilweise verschließt,
wobei die Hauptverschlusswand (9) eine blockierte offene Stellung besitzt, in der sie bezüglich des Armaturenbretts in offener Stellung blockiert ist,
**dadurch gekennzeichnet, dass** die Hauptverschlusswand (9) eine Verschlusswand (39) aufweist, die aus der Hauptwand über das dem Anlenkungsende entgegengesetzte Ende ausziehbar ist,
und dass, wenn die Hauptverschlusswand (9) in ihrer blockierten offenen Stellung ist, die ausziehbare Verschlusswand (39) mindestens eine offene Stellung, die den Raum (1) frei zugänglich lässt, und eine geschlossene Stellung besitzt, die den Raum (1) mindestens teilweise verschließt.

2. Anordnung nach Anspruch 1, **dadurch gekennzeichnet, dass** die Hauptverschlusswand (9) im Wesentlichen starr ist, während die ausziehbare Wand (39) im Wesentlichen biegsam ist.

3. Anordnung nach Anspruch 1 oder 2, **dadurch gekennzeichnet, dass** die Hauptwand (9) hohl ist mit einer inneren Aussparung (27), in der die ausziehbare Wand (39) untergebracht sein kann und in der diese zwischen ihrer eingezogenen Stellung, die ihrer offenen Stellung entspricht, und ihrer ausgezogenen Stellung, die ihrer geschlossenen Stellung entspricht, gleiten kann.

4. Anordnung nach einem der Ansprüche 1 bis 3, **dadurch gekennzeichnet, dass** sie Führungsmittel (51) umfasst, die sich bezüglich der Hauptverschlusswand (9) seitlich erstrecken und die Führung der ausziehbaren Wand (39) zwischen ihrer offenen und ihrer geschlossenen Stellung gewährleisten.

5. Anordnung nach Anspruch 4, **dadurch gekennzeichnet, dass** die Führungsmittel Schienen (51) umfassen, die sich parallel auf der Seite jeder der beiden feststehenden Seitenwände (3) erstrecken und jeweils zur Aufnahme eines der beiden entgegensetzten Ränder der ausziehbaren Wand (39) vorgesehen sind.

6. Anordnung nach einem der Ansprüche 1 bis 5, **dadurch gekennzeichnet, dass** die ausziehbare Wand (39) mit freigebbaren Einhakmitteln (45) versehen ist, die vorgesehen sind, um in der geschlossenen Stellung der ausziehbaren Wand mit ergänzenden Einhakmitteln (47) zusammenzuwirken, die auf einem Armaturenbrettteil (43) in Nähe des Eingangs des Raums (1) angeordnet sind.

7. Anordnung nach einem der Ansprüche 1 bis 6, **dadurch gekennzeichnet, dass** die Hauptwand (9) so angelenkt ist, dass sie sich zwischen zwei entgegengesetzten feststehenden Seitenwänden (3) verschwenken kann, wobei diese entgegengesetzten Seitenwände (3) und die Hauptverschlusswand (9) ergänzende freigebbare Blockiermittel (13, 15, 19) umfassen, die die freigebbare Blockierung der Hauptwand (9) mindestens in ihrer blockierten offenen Stellung und ihrer geschlossenen Stellung gewährleisten.

8. Anordnung nach Anspruch 7, **dadurch gekennzeichnet, dass** diese freigebbaren Blockiermittel in jeder der entgegengesetzten Seitenwände (3) zwei Sperrrasten bildende Aussparungen (13, 15), die jeweils einer der offenen blockierten und geschlossenen Stellungen der Hauptverschlusswand (9) entsprechen, und einen ergänzenden Stift (19) umfassen, der in der Hauptverschlusswand (9) so angeordnet ist, dass er wahlweise eine in die Hauptverschlusswand eingezogene Stellung und eine ausgezogene Blockierstellung einnehmen kann, in der er seitlich an der Hauptwand (9) hervorragt und in eine entsprechende Aussparung (13, 15) eintreten kann.
